# EUROPEAN PATENT APPLICATION

(11) **EP 4 485 430 A1**
(43) Date of publication of application: **01.01.2025**
(21) Application number: 23207331.2
(22) Date of filing: 02.11.2023
(51) Int. Cl.: G09C 1/00, H04L 9/06, H04L 9/08

(54) **METHOD AND APPARATUS TO REDUCE PERFORMANCE OVERHEAD ASSOCIATED WITH THE USE OF KYBER FOR SECURE KEY EXCHANGE**

(30) Priority: 30.06.2023 US 202318217445
(71) Applicant: INTEL Corporation, Santa Clara, CA 95054 (US)
(72) Inventor: GHOSH, SANTOSH, Hillsboro, 97124 (US); WANG, Qian, Portland, 97229 (US); SASTRY, Manoj, Portland, 97229 (US)
(74) Representative: Goddar, Heinz J.

(57) **Abstract**

Kyber is a secure key encapsulation mechanism (KEM) for secure key exchange. Performance overhead associated with use of Kyber for secure key exchange is reduced by computing multiple coefficients of different polynomials for independent operations in parallel and localizing them in memory for fast access for polynomial multiplications used in key generation, encapsulation, and decapsulation allowing for parallelization of Keccak calls.

## Description

### BACKGROUND

Communication protocols rely on core cryptographic functionalities that include public key encryption, digital signatures, and key exchange. A quantum computer is a machine that exploits quantum mechanical phenomena to solve mathematical problems that are difficult or intractable for conventional computers and can break many public key cryptosystems that are currently used. The goal of post-quantum cryptography (also called quantum-resistant cryptography) is to develop cryptographic systems that are secure against both quantum and classical computers, and can interoperate with existing communications protocols and networks.

CRYSTALS-Kyber is an indistinguishability under adaptive chosen ciphertext attack (IND-CCA2)- secure key encapsulation mechanism (KEM) for secure key exchange. CRYSTALS-Kyber ("Kyber") is a quantum-safe algorithm (QSA) and is a member of the CRYSTALS (Cryptographic Suite for Algebraic Lattices) suite of algorithms. The security of Kyber is based on the hardness of solving the learning-with-errors problem in module lattices (MLWE problem). Kyber is used to establish a shared secret between two communicating parties and is the first post-quantum cryptography (PQC) standard.

### BRIEF DESCRIPTION OF DRAWINGS

Various examples in accordance with the present disclosure will be described with reference to the drawings, in which:
FIG. 1 illustrates an example computing system;
FIG. 2 illustrates a block diagram of an example processor and/or System on a Chip (SoC) that may have one or more cores, an integrated memory controller and a Kyber hardware accelerator;
FIG. 3 is a block diagram of the Kyber hardware accelerator shown in FIG. 2 that includes a plurality of SHA-3 hash engines that are configured to generate Matrix Â for Kyber. CPAPKE. KeyGen();
FIG. 4 is an execution flow chart of the Kyber hardware accelerator shown in FIG. 3 configured to generate Matrix Â for Kyber.CPAPKE.KeyGen();
FIG. 5 is a block diagram of the Kyber hardware accelerator shown in FIG. 2 that includes a plurality of SHA-3 hash engines that are configured to generate secret vector a and secret vector e for Kyber.CPAPKE.KeyGen();
FIG. 6 is an execution flow chart of the Kyber hardware accelerator shown in FIG. 3 configured to generate secret vector s and secret vector e for Kyber. CPAPKE. KeyGen();
FIG. 7 is a table 700 that illustrates three parameter sets Kyber512, Kyber768, and Kyber1024 defined for Kyber;
FIG. 8 is a table that illustrates the number of independent Keccak1600 operations for the Kyber:CCAKEM:Enc(pk) process for each Kyber variant; and
FIG. 9 is a table that illustrates the number of independent Keccak1600 operations for the Kyber:CCAKEM:Dec(c; sk) process for each Kyber variant.

### DETAILED DESCRIPTION

Kyber replaces non-quantum-safe Elliptic-curve Diffie-Hellman (ECDH)-based key exchange schemes that use an elliptic-curve public-private key pair, to establish a shared secret over an insecure channel. Variants of Kyber with different security levels have been defined, for example, Kyber512 with NIST security level 1 has a security level that is equivalent to AES 128, Kyber768 with NIST security level 2 has a security level that is equivalent to Advanced Encryption Standard (AES) 192, and Kyber1024 with NIST security level 3 has a security level that is equivalent to AES 256.

There is a performance overhead associated with using Kyber, as compared to (ECDH)-based key exchange schemes because Kyber has large keys, ciphertext and signatures. For example, Kyber1024 has a 3168 byte (25,344 bits) private key, a 1568 byte (12,544 bits) public key and a 1568 byte (12,544 bits) ciphertext.

Through a Key Encapsulation mechanism Kyber establishes a shared secret which is used as the Symmetric Key for bulk data encryption between two parties. Kyber uses permutation based hash and extendable-output functions defined by the SHA-3 standard to establish the shared secret. For example, due to the performance overhead, TLS (Transport Layer Security) connections per second are reduced to approximately 60%.

Kyber is based on the Module Learning With Error problem which relies on matrix and vectors of polynomials. Each of these polynomials are formed as degree 256 where coefficients of the polynomials are 12 bit long and follow mod q (= 3329) arithmetic. Performance overhead associated with the use of Kyber for secure key exchange is reduced by computing multiple coefficients of different polynomials for an independent operation in parallel and localizing the coefficients in memory for fast access for polynomial multiplications used in key generation, encapsulation, and decapsulation allowing for parallelization of Keccak calls.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

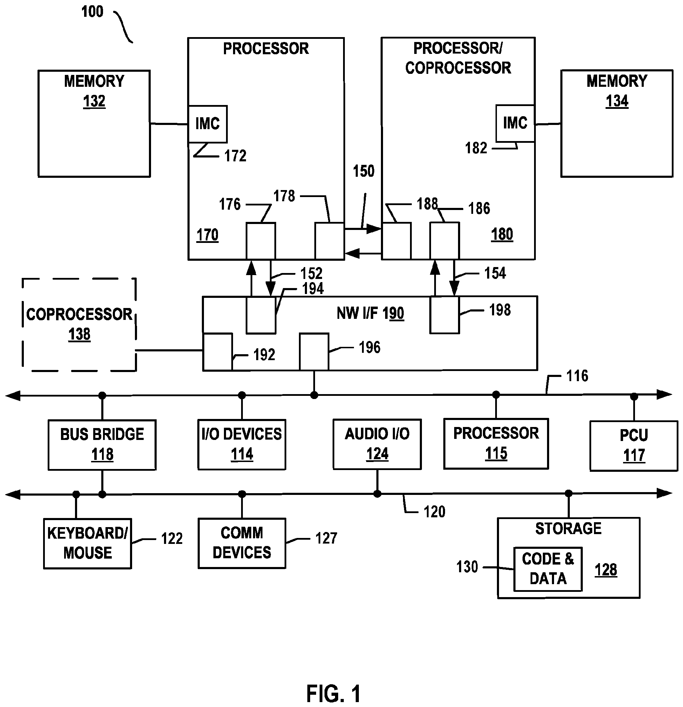

FIG. 1 illustrates an example computing system. Multiprocessor system 100 is an interfaced system and includes a plurality of processors or cores including a first processor 170 and a second processor 180 coupled via an interface 150 such as a point-to-point (P-P) interconnect, a fabric, and/or bus. In some examples, the first processor 170 and the second processor 180 are homogeneous. In some examples, first processor 170 and the second processor 180 are heterogenous. Though the example system 100 is shown to have two processors, the system may have three or more processors, or may be a single processor system. In some examples, the computing system is a system on a chip (SoC).

Processors 170 and 180 are shown including integrated memory controller (IMC) circuitry 172 and 182, respectively. Processor 170 also includes interface circuits 176 and 178; similarly, second processor 180 includes interface circuits 186 and 188. Processors 170, 180 may exchange information via the interface 150 using interface circuits 178, 188. IMCs 172 and 182 couple the processors 170, 180 to respective memories, namely a memory 132 and a memory 134, which may be portions of main memory (system memory) locally attached to the respective processors. The memory 132 and memory 134 to store instructions and data.

Processors 170, 180 may each exchange information with a network interface (NW I/F) 190 via individual interfaces 152, 154 using interface circuits 176, 194, 186, 198. The network interface 190 (e.g., one or more of an interconnect, bus, and/or fabric, and in some examples is a chipset) may optionally exchange information with a co-processor 138 via an interface circuit 192. In some examples, the co-processor 138 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 170, 180 or outside of both processors, yet connected with the processors via an interface such as a point to point (P-P) interconnect, such that either or both processors' local cache information may be stored in the shared cache if a processor is placed into a low power mode.

Network interface 190 may be coupled to a first interface 116 via interface circuit 196. In some examples, first interface 116 may be an interface such as a Peripheral Component Interconnect (PCI) interconnect, a PCI Express interconnect or another I/O interconnect. In some examples, first interface 116 is coupled to a power control unit (PCU) 117, which may include circuitry, software, and/or firmware to perform power management operations with regard to the processors 170, 180 and/or co-processor 138. PCU 117 provides control information to a voltage regulator (not shown) to cause the voltage regulator to generate the appropriate regulated voltage. PCU 117 also provides control information to control the operating voltage generated. In various examples, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other examples, power management operations to be performed by PCU 117 may be implemented externally to a processor, such as by way of a separate power management integrated circuit (PMIC) or another component external to the processor. In yet other examples, power management operations to be performed by PCU 117 may be implemented within BIOS or other system software.

Various I/O devices 114 may be coupled to first interface 116, along with a bus bridge 118 which couples first interface 116 to a second interface 120. In some examples, one or more additional processor(s) 115, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 116. In some examples, second interface 120 may be a low pin count (LPC) interface. Various devices may be coupled to second interface 120 including, for example, a keyboard and/or mouse 122, communication devices 127 and storage circuitry 128. Storage circuitry 128 may be one or more non-transitory machine-readable storage media as described below, such as a disk drive or other mass storage device which may include instructions/code and data 130 and may implement the storage 'ISAB03 in some examples. Further, an audio I/O 124 may be coupled to second interface 120. Note that other architectures than the point-to-point architecture described above are possible. For example, instead of the point-to-point architecture, a system such as multiprocessor system 100 may implement a multi-drop interface or other such architecture.

### Example Core Architectures, Processors, and Computer Architectures.

Processor cores ("cores") may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality.

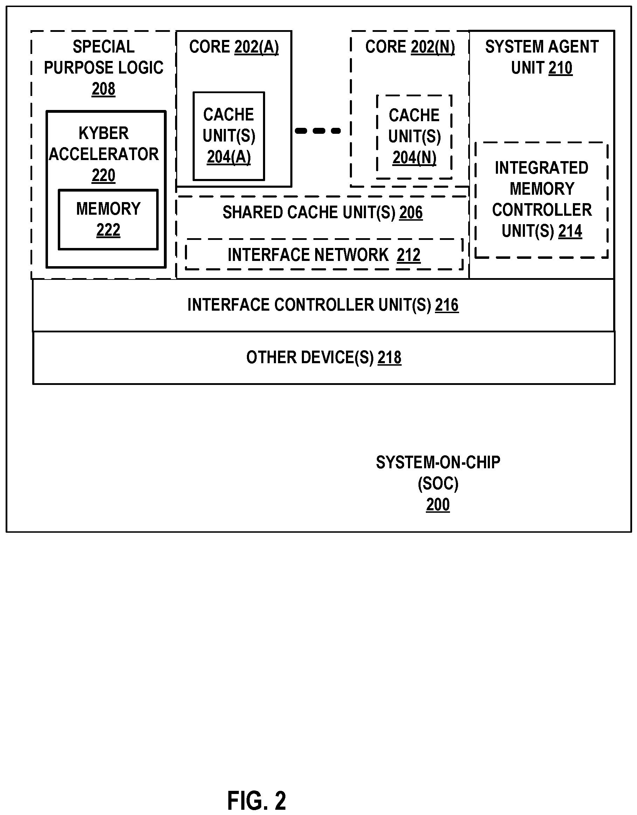

FIG. 2 illustrates a block diagram of an example SoC 200 that may have one or more processor cores, an integrated memory controller and a Kyber hardware accelerator 220. The SoC 200 includes different components (hardware elements), also called "blocks" or subsystems.

The solid lined boxes illustrate an SoC 200 with a single processor core 202(A), system agent unit circuitry 210, and a set of one or more interface controller unit(s) circuitry 216, while the optional addition of the dashed lined boxes illustrates an alternative SoC 200 with multiple cores 202(A)-(N), a set of one or more integrated memory controller unit(s) circuitry 214 in the system agent unit circuitry 210, and special purpose logic 208, as well as a set of one or more interface controller units circuitry 216. Note that the SoC 200 may be one of the processors 170 or 180, or co-processor 138 or 115 of FIG. 1.

Thus, different implementations of the SoC 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the SoC 200 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The SoC 200 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 204(A)-(N) within the cores 202(A)-(N), a set of one or more shared cache unit(s) circuitry 206, and external memory (not shown) coupled to the set of integrated memory controller unit(s) circuitry 214. The set of one or more shared cache unit(s) circuitry 206 may include one or more mid-level caches, such as level 2 (L2), level 3 (L3), level 4 (L4), or other levels of cache, such as a last level cache (LLC), and/or combinations thereof. While in some examples interface network circuitry 212 (e.g., a ring interconnect) interfaces the special purpose logic 208 (e.g., integrated graphics logic), the set of shared cache unit(s) circuitry 206, and the system agent unit circuitry 210, alternative examples use any number of well-known techniques for interfacing such units. In some examples, coherency is maintained between one or more of the shared cache unit(s) circuitry 206 and cores 202(A)-(N). In some examples, interface controller units circuitry 216 couple the cores 202 to one or more other devices 218 such as one or more I/O devices, storage, one or more communication devices (e.g., wireless networking, wired networking, etc.), etc.

In some examples, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous in terms of instruction set architecture (ISA). Alternatively, the cores 202(A)-(N) may be heterogeneous in terms of ISA; that is, a subset of the cores 202(A)-(N) may be capable of executing an ISA, while other cores may be capable of executing only a subset of that ISA or another ISA.

The Kyber hardware accelerator 220 includes a Static Random Access Memory (SRAM) 222.

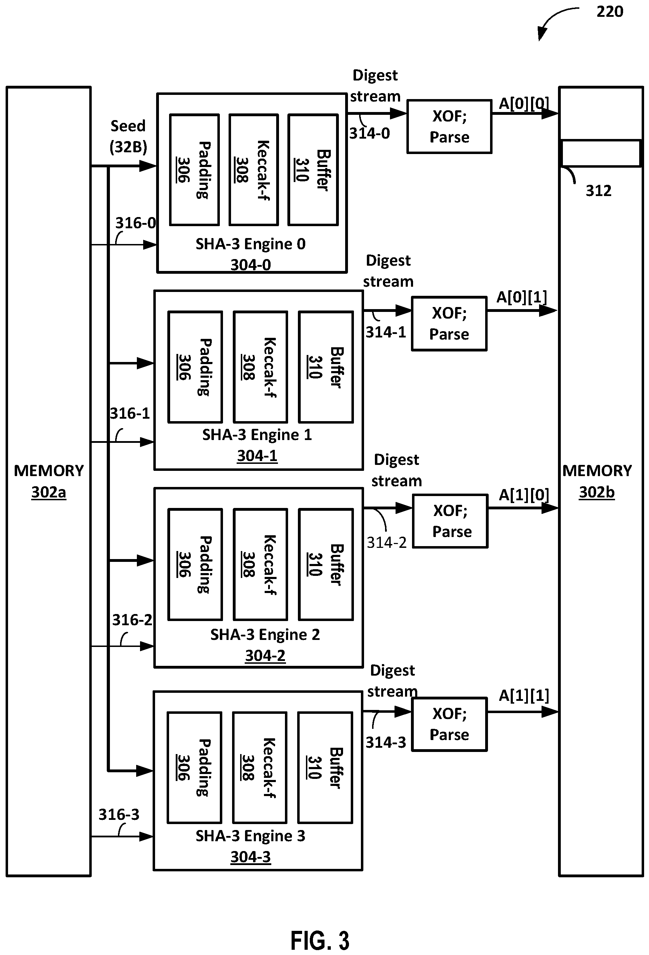

FIG. 3 is a block diagram of the Kyber hardware accelerator 220 shown in FIG. 2 that includes a plurality of SHA-3 hash engines 304-0, 304-1, 304-2, 304-3 that are configured to generate Matrix Â for Kyber.CPAPKE.KeyGen().

The SHA-3 Standard (FIPS PUB 202) specifies the Secure Hash Algorithm-3 (SHA-3) family of functions on binary data. Each of the SHA-3 functions is based on an instance of the KECCAK algorithm. The SHA-3 family consists of four cryptographic hash functions, called SHA3-224, SHA3-256, SHA3-384, and SHA3-512, and two extendable-output functions (XOFs), called SHAKE128 and SHAKE256. Hash functions are components for information security applications, including 1) the generation and verification of digital signatures, 2) key derivation, and 3) pseudorandom bit generation. For hash functions, the input is called the message, and the output is called the (message) digest or the hash value. The length of the message can vary; the length of the digest is fixed.

Kyber.CPAPKE is an INDCPA-secure public-key encryption (PKE) scheme encrypting messages of a fixed length of 32 bytes. Kyber.CPAPKE.KeyGen() performs key generation for Kyber public-key encryption. The Kyber hardware accelerator 220 is used to perform Kyber.CPAPKE.KeyGen(). Kyber.CPAPKE.KeyGen() performs key generation and has three independent operations, 1) generate Matrix Â, 2) generate secret vector a, and 3) generate secret vector e. Kyber. CPAPKE.KeyGenQ uses the Matrix Â, secret vector a and secret vector e to generate a secret key (sk) and a public key (pk). The independent operations allow Keccak calls to be parallelized.

In the embodiment shown in FIG. 3 there are four SHA-3 engines 304-0, 304-1, 304-2, 304-3. The input (message) to each of the SHA-3 engines 304-0, 304-1, 304-2, 304-3 is a 32 byte seed (ρ). The 32 byte seed (ρ) is a randomly generated value to be used as the initial message. The same seed (32 byte seed (ρ)) that is stored in memory 302a is input in parallel to each of the four SHA-3 engines 304-0, 304-1, 304-2, 304-3.

Each of the four SHA-3 engines 304-0, 304-1, 304-2, 304-3 has a respective counter in memory 302a. The respective counter value 316-0, 316-1, 316-2, 316-4 stored in the counters in memory 302a is read by the respective SHA-3 engine 304-0, 304-1, 304-2, 304-3 and concatenated with the 32 byte seed (ρ) in the SHA-3 engine 304-0, 304-1, 304-2, 304-3 to generate unique pseudorandom stream for different polynomials of Matrix Â. In an embodiment, the size of the counter value is 4 bytes.

The SHA-3 engines 304-0, 304-1, 304-2, 304-3 generate Matrix Â (Â[i][j]) in the NTT domain by performing the operations shown below in parallel. The variable k defines the size of the public matrix Â as k x k. The variables i and j are temporary variables used in this procedure to generate k x k polynomials of Â.

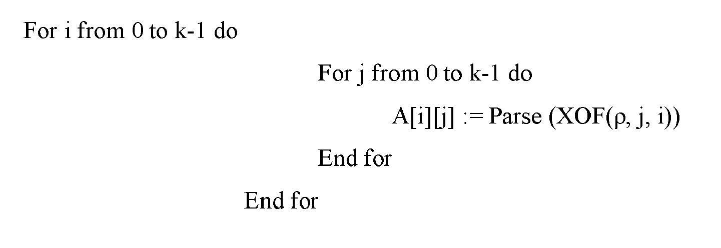

Each of the SHA-3 engines 304-0, 304-1, 304-2, 304-3 are configured as an extendable output function (XOF()). Each SHA-3 engine 304-0, 304-1, 304-2, 304-3 performs an XOF() function to process an element of matrix Â. In an embodiment the XOF() function is the SHAKE128 function defined in the Federal Information Processing Standard (FIPS)-202 standard. XOF is a function on bit strings in which the output can be extended to any desired length.

Each SHA-3 engine processes a different element of matrix Â in parallel. Each of the SHA-3 engines 304-0, 304-1, 304-2, 304-3 includes padding 306, Keccak-f 308 and buffer 310. Padding 306 takes any arbitrary length less than a SHA3 block-size as input data and transforms it to data with length equal to the SHA-3 block-size. Keccak-f 308 computes the 24 rounds Keccak operations on the input data received from padding 306. Buffer 310 stores the output from Keccak-f block locally. The output stored in buffer 310 is output from buffer 310 as a byte stream.

Each SHA-3 engine 304-0, 304-1, 304-2, 304-3 outputs a respective digest stream (byte stream) 314-0, 314-1 314-2, 314-3. The byte stream is processed by a Parse function (Parse ()) which receives the byte stream and computes the NTT-representation. The coefficient outputs of the Parse functions are written to memory 302b.

The output is processed serially to derive the respective polynomial coefficients. Each of these polynomials are formed as degree 256 where coefficients of the polynomials have 12 bits and follow mod q (= 3329) arithmetic. In each cycle for matrix Â generation, two coefficients are computed from the output (digest stream) of each of the SHA3 engines. To enable parallel access during polynomial multiplications, all 4x2 coefficients of same 2 indices of 4 polynomials are written to the same memory location 312 in memory 302b. Memory 302a and memory 302b are both SRAM and can be separate SRAM memory devices or different portions of the same SRAM device.

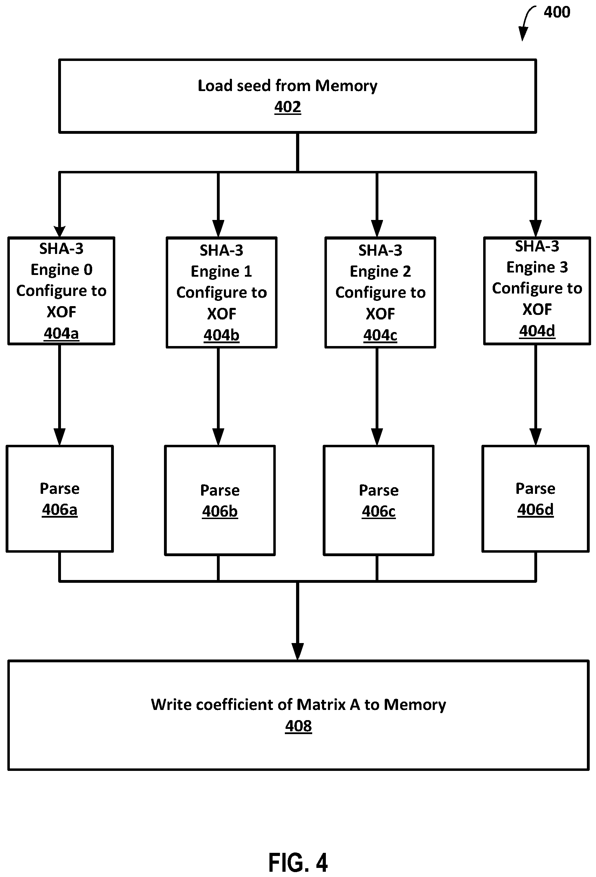

FIG. 4 is an execution flow chart of the Kyber hardware accelerator 220 shown in FIG. 3 configured to generate Matrix Â for Kyber. CP APKE. KeyGenQ.

At block 402, the 32 byte seed (ρ) is loaded from memory. The 32 byte seed (ρ) is shared among the 4 SHA-3 engines 304-0, 304-1, 304-2, 304-3.

At blocks 404a, 404b, 404c, 404d, each respective SHA-3 engine performs an XOF() function to process a different element of matrix Â in parallel.

At blocks 406a, 406b, 406c, 406d, each respective digest stream (byte stream) output by the respective SHA-3 engine is processed by a Parse function (Parse()) in parallel.

At block 408, the coefficient outputs of the Parse functions are written to the same memory location 312 in memory.

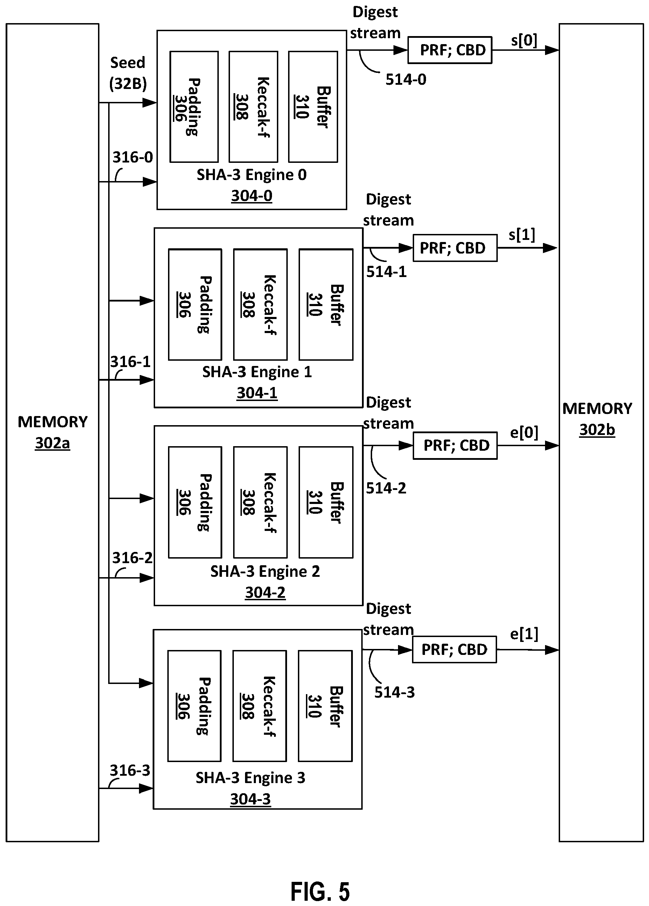

FIG. 5 is a block diagram of the Kyber hardware accelerator shown in FIG. 2 that includes a plurality of SHA-3 engines 304-0, 304-1, 304-2, 304-3 that are configured to generate secret vector a and secret vector e for Kyber.CPAPKE.KeyGen().

In the embodiment shown in FIG. 5 there are four SHA-3 engines 304-0, 304-1, 304-2, 304-3. The input (message) to each of the SHA-3 engines 304-0, 304-1, 304-2, 304-3 is a 32 byte seed (σ). The 32 byte seed (σ) is a randomly generated value to be used as the initial message. The same 32 byte seed (σ) that is stored in memory 302a is input in parallel to each of the four SHA-3 engines 304-0, 304-1, 304-2, 304-3.

Two of the SHA-3 Engines (SHA-3 Engine 0 304-0 and SHA-3 Engine 1 304-1) generate secret vector s by performing the operations shown below in parallel on SHA-3 Engine 0 304-0 and SHA-3 Engine 1 304-1. N is an integer (4 Bytes) and σ is a 32 Byte stream. The PRF is defined as SHAKE256 computation on the σ concatenated with N. SHAKE256 is a NIST standard SHA3 Extended Output Function.

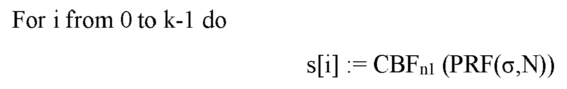

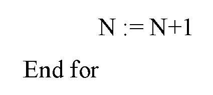

The other two SHA-3 Engines (SHA-3 Engine 2 304-2 and SHA-3 Engine 3 304-3) generate secret vector e by performing the operations shown below in parallel on SHA-3 Engine 2 304-2 and SHA-3 Engine 3 304-3.

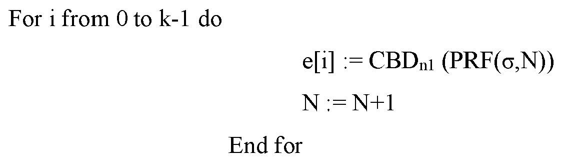

Each of the SHA-3 engines 304-0, 304-1, 304-2, 304-3 are configured as a pseudorandom function (PRF()). In an embodiment the PRF() function is the SHAKE256 function defined in the Federal Information Processing Standard (FIPS)-202 standard. SHA-3 Engine 0 304-0 and SHA-3 Engine 1 304-1 are used to generate vector s. SHA-3 Engine 304-2 and SHA-3 Engine 3 304-3 are used to generate vector e.

Each SHA-3 engine outputs a respective digest stream (byte stream) 514-0, 514-1, 514-2, 514-3. The byte stream 514-0, 514-1, 514-2, 514-3 is processed by a Centered Binomial Distribution (CBD()) function to sample the coefficient. Both the secret vector s and the secret vector e are written to the memory 302b in parallel.

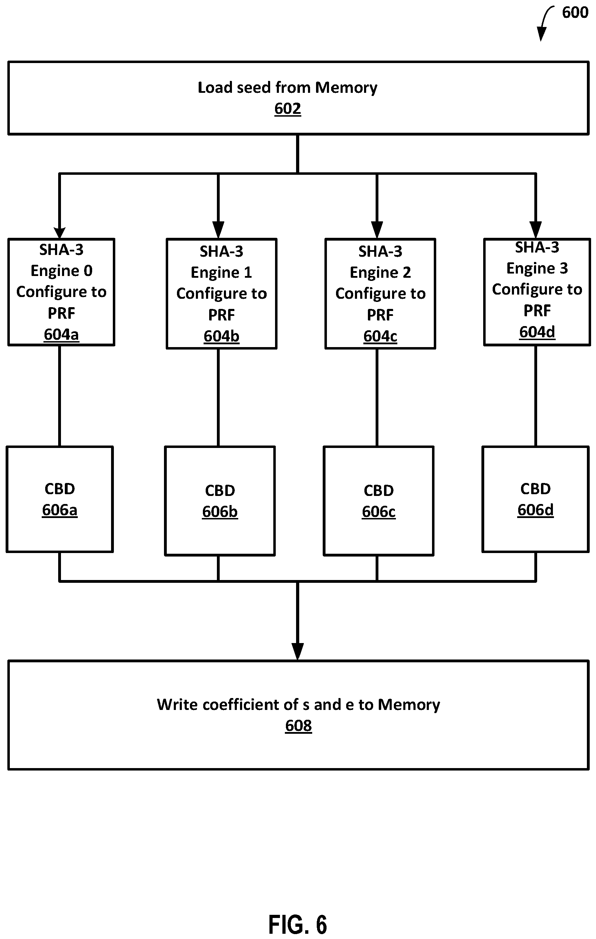

FIG. 6 is an execution flow chart of the Kyber hardware accelerator shown in FIG. 3 configured to generate secret vector s and secret vector e for Kyber. CPAPKE. KeyGen().

At block 602, the 32 byte seed (σ) is loaded from memory. The 32 byte seed (σ) is shared among the 4 SHA-3 engines 304-0, 304-1, 304-2, 304-3.

At blocks 604a, 604b, SHA-3 Engine 0 and SHA-3 Engine 1 each perform a pseudorandom function (PRF()) in parallel to generate secret vector s.

At blocks 604c, 604d, SHA-3 Engine 2 and SHA-3 Engine 3 each perform a pseudorandom function (PRF()) in parallel to generate secret vector e. The PRF to generate secret vector s and the PRF to generate secret vector e are performed in parallel.

At blocks 606a, 606b, each respective digest stream (byte stream) 514-0, 514-1 output by the SHA-3 Engine 0 and SHA-3 Engine 1 is processed by a CBD() function in parallel.

At blocks 606c, 606d, each respective digest stream (byte stream) 514-2, 514-3 output by the SHA-3 Engine 2 and SHA-3 Engine 3 is processed by a CBD() function in parallel.

At block 608, the coefficient outputs (e[0], e[1]) of secret vector e and the coefficient outputs (s[0], s[1]) of secret vector s are written to memory 302b.

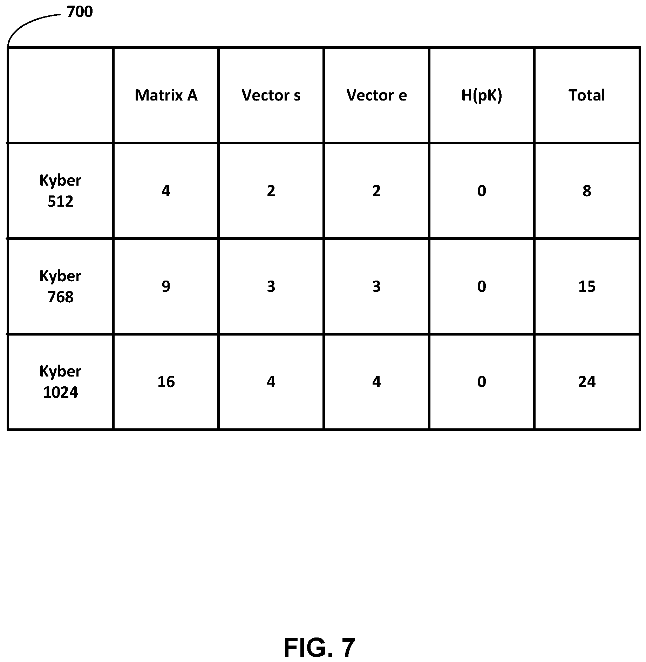

FIG. 7 is a table 700 that illustrates three parameter sets Kyber512, Kyber768, and Kyber1024 defined for Kyber.

The table 700 shows the number of independent Keccak operations involved for each Kyber variant (Kyber512, Kyber768, and Kyber1024) for computing the Matrix A, Secret Vector S, Error Vector e and Hash of the public key (PK) during Key generation. For example, for Kyber1024, there are 16 Keccak operations to compute Matrix A, 4 Keccak operations to compute Secret Vector S, 4 Keccak operations to compute Error Vector e and 0 Keccak operations to compute Hash of the public key (PK). The total number of Keecak operations for Kyber1024 is 24.

The utilization of four SHA3 hardware engines to generate Matrix A and secret vectors (s, e) for the KeyGen() process in the Kyber hardware accelerator yields a significant increase in performance (approximately 3.89 times faster to compute Kyber1024) in comparison to a Kyber hardware accelerator with just one SHA3 engine.

Similarly, in the Kyber: CCAKEM: Enc(pk) process, matrix and vector generation, and other wrapper hash functions, for example, H() and G(), can be parallelized. The number of parallel functions is dependent on the parameter k which defines the size of the public matrix, vector s and e. For example, k = 2 for Kyber512, k = 3 for Kyber768 and k = 4 for Kyber1024.

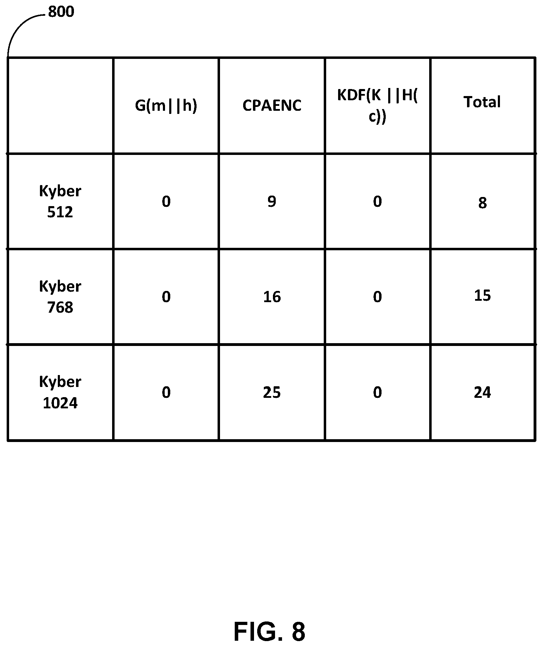

FIG. 8 is a table 8-- that illustrates the number of independent Keccak1600 operations for the Kyber:CCAKEM:Enc(pk) process for each Kyber variant. A Keccak1600 operation is a 24 round permutation function in SHA3.

The table 800 in FIG. 8 shows the number of independent Keccak1600 operations for computing each variable listed in the columns. Matrix A is the public matrix in Kyber. Vector r in Enc is the secret vector. E1 and e2 are errors used to form Learning With Error problem during Kyber Enc procedure. H(m) is the hash of the message representative m. H(PK) is the hash of the public key PK. G(m ∥ H(PK)) G function is another hash function. H(c) is hash of the ciphertext c. KDF(K ∥ H(c)) KDF stands for Key Derivation Function and it relies on a hash function.

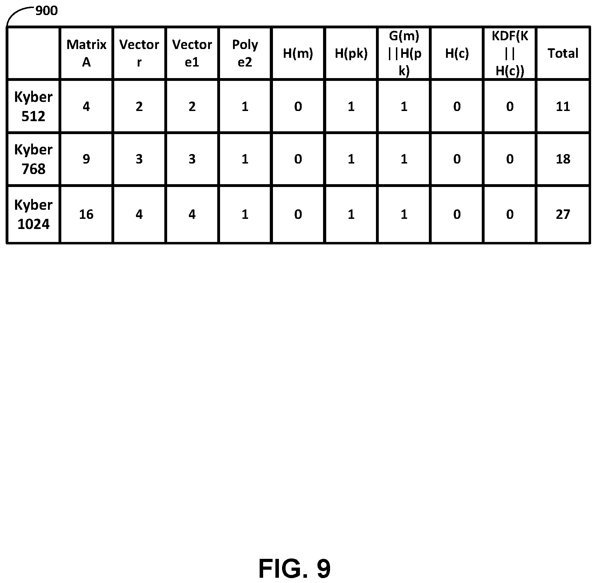

FIG. 9 is a table 900 that illustrates the number of independent Keccak1600 operations for the Kyber: CCAKEM:Dec(c; sk) process for each Kyber variant. A Keccak1600 operation is a 24 round permutation function in SHA3. Table 900 shows the number of independent Keccak1600 operations for computing each variable listed in the columns. G(m||h) is a hash function on input variable m and h. CPAENC is the Kyber Chosen Plaintext Encryption.

An embodiment of a Kyber hardware accelerator with four SHA3 engines has been described. In other embodiments, the Kyber hardware accelerator can have two or more Secure Hash Algorithm engines (less than four SHA3 engines (for example, 2 or 3) or more than 4 SHA3 engines (for example, 5, 6, 7 or 8 SHA3 engines)). In each of these embodiments there are different scheduling mechanisms, memory bandwidth and memory organization.

As discussed, the Kyber hardware accelerator with parallel SHA-3 engines reduces latency for secure key exchange for Kyber. Additionally, enriching the PQC portfolio with the HW IP, enables the kyber scheme that is the selected standardization for the lattice based. Also, the multiple instances of the SHA3 engines described for use with Kyber design modules proposed in this invention are generic and can be easily ported across other lattice based PQC primitives, for example, Dilithium.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

### EXAMPLES

Illustrative examples of the technologies disclosed herein are provided below. An embodiment of the technologies may include any one or more, and any combination of, the examples described below.

Example 1 is a system on chip. The system on chip comprising a processor core and a Kyber hardware accelerator. The Kyber hardware accelerator including two or more Secure Hash Algorithm (SHA)-3 engines. Each SHA-3 engine to receive a same seed in parallel and to perform in parallel an independent operation on the same seed for one or more operations to generate a key for Kyber public-key encryption.

Example 2 includes the system on chip of Example 1, optionally the one or more operations to generate the key for Kyber public-key encryption comprises operations performed on the two or more SHA-3 engines to generate Matrix A.

Example 3 includes the system on chip of Example 2, optionally a number of SHA-3 engines is four, each SHA-3 engine to receive a respective counter value, each respective counter value concatenated with the seed to generate a unique pseudorandom stream for different polynomials of the Matrix A.

Example 4 includes the system on chip of Example 3, optionally each of the SHA-3 engines is to perform an extendable output function (XOF) to process an element of Matrix A.

Example 5 includes the system on chip of Example 4, optionally coefficient outputs of a parse function performed in parallel on each of the outputs of the SHA-3 engines are written to a same memory location in a memory in the Kyber hardware accelerator.

Example 6 includes the system on chip of Example 1, optionally a first operation to generate secret vector a is performed on a first portion of the two or more SHA-3 engines and a second operation to generate secret vector e is performed on a second portion of the two or more SHA-3 engines, secret vector a and secret vector e used to generate the key for Kyber public-key encryption.

Example 7 includes the system on chip of Example 6, optionally a number of SHA-3 engines is four, the first portion is two and the second portion is two.

Example 8 is a system comprising a system memory and a system on chip coupled to the system memory. The system on chip including a processor core and a Kyber hardware accelerator. The Kyber hardware accelerator including two or more Secure Hash Algorithm (SHA)-3 engines. Each SHA-3 engine to receive a same seed in parallel and to perform in parallel an independent operation on the same seed for one or more operations to generate a key for Kyber public-key encryption.

Example 9 includes the system of Example 8, optionally the one or more operations to generate the key for Kyber public-key encryption comprises operations performed on the two or more SHA-3 engines to generate Matrix A.

Example 10 includes the system of Example 9, optionally a number of SHA-3 engines is four, each SHA-3 engine to receive a respective counter value, each respective counter value concatenated with the seed to generate a unique pseudorandom stream for different polynomials of the Matrix A.

Example 11 includes the system of Example 10, optionally each of the SHA-3 engines is to perform an extendable output function (XOF) to process an element of Matrix A.

Example 12 includes the system of Example 11, optionally coefficient outputs of a parse function performed in parallel on each of the outputs of the SHA-3 engines are written to a same memory location in a memory in the Kyber hardware accelerator.

Example 13 includes the system of Example 8, optionally a first operation to generate secret vector a is performed on a first portion of the two or more SHA-3 engines and a second operation to generate secret vector e is performed on a second portion of the two or more SHA-3 engines, secret vector a and secret vector e used to generate the key for Kyber public-key encryption.

Example 14 includes the system of Example 8, optionally a number of SHA-3 engines is four, the first portion is two and the second portion is two.

Example 15 is a method including receiving, by two or more Secure Hash Algorithm (SHA)-3 engines in a Kyber hardware accelerator, a same seed in parallel. The method performing, by the SHA-3 engines in parallel, an independent operation on the same seed for one or more operations to generate a key for Kyber public-key encryption.

Example 16 includes the method of Example 15, optionally the one or more operations to generate the key for Kyber public-key encryption comprises operations performed on the two or more SHA-3 engines to generate Matrix A.

Example 17 includes the method of Example 16, optionally a number of SHA-3 engines is four, each of the SHA-3 engines is to perform an extendable output function (XOF) to process an element of Matrix A.

Example 18 includes the method of Example 17, optionally coefficient outputs of a parse function performed in parallel on each of the outputs of the SHA-3 engines are written to a same memory location in a memory in the Kyber hardware accelerator.

Example 19 includes the method of Example 15, optionally a first operation to generate secret vector a is performed on a first portion of the two or more SHA-3 engines and a second operation to generate secret vector e is performed on a second portion of the two or more SHA-3 engines, secret vector a and secret vector e used to generate the key for Kyber public-key encryption.

Example 20 includes the method of Example 15, optionally a number of SHA-3 engines is four, the first portion is two and the second portion is two.

## Claims

1. A system on chip comprising:
a processor core; and
a Kyber hardware accelerator, the Kyber hardware accelerator comprising:
two or more Secure Hash Algorithm (SHA)-3 engines, each SHA-3 engine to receive a same seed in parallel and to perform in parallel an independent operation on the same seed for one or more operations to generate a key for Kyber public-key encryption.

2. The system on chip of claim 1, wherein the one or more operations to generate the key for Kyber public-key encryption comprises operations performed on the two or more SHA-3 engines to generate Matrix A.

3. The system on chip of claim 2, wherein a number of SHA-3 engines is four, each SHA-3 engine to receive a respective counter value, each respective counter value concatenated with the seed to generate a unique pseudorandom stream for different polynomials of the Matrix A.

4. The system on chip of claim 3, wherein each of the SHA-3 engines is to perform an extendable output function (XOF) to process an element of Matrix A.

5. The system on chip of claim 4, wherein coefficient outputs of a parse function performed in parallel on each of the outputs of the SHA-3 engines are written to a same memory location in a memory in the Kyber hardware accelerator.

6. The system on chip of any of claims 1 to 5, wherein a first operation to generate secret vector a is performed on a first portion of the two or more SHA-3 engines and a second operation to generate secret vector e is performed on a second portion of the two or more SHA-3 engines, secret vector a and secret vector e used to generate the key for Kyber public-key encryption.

7. The system on chip of claim 6, wherein a number of SHA-3 engines is four, the first portion is two and the second portion is two.

8. A method comprising:
receiving, by two or more Secure Hash Algorithm (SHA)-3 engines in a Kyber hardware accelerator, a same seed in parallel; and
performing, by the SHA-3 engines in parallel, an independent operation on the same seed for one or more operations to generate a key for Kyber public-key encryption.

9. The method of claim 8, wherein the one or more operations to generate the key for Kyber public-key encryption comprises operations performed on the two or more SHA-3 engines to generate Matrix A.

10. The method of claim 9, wherein a number of SHA-3 engines is four, each of the SHA-3 engines is to perform an extendable output function (XOF) to process an element of Matrix A.

11. The method of claim 10, wherein coefficient outputs of a parse function performed in parallel on each of the outputs of the SHA-3 engines are written to a same memory location in a memory in the Kyber hardware accelerator.

12. The method of claim 10, wherein a first operation to generate secret vector a is performed on a first portion of the two or more SHA-3 engines and a second operation to generate secret vector e is performed on a second portion of the two or more SHA-3 engines, secret vector a and secret vector e used to generate the key for Kyber public-key encryption.

13. The method of claim 12, wherein a number of SHA-3 engines is four, the first portion is two and the second portion is two.

14. An apparatus comprising means for performing the method of any one of claims 8 to 13.

15. Machine-readable storage including machine-readable instructions, when executed, to implement the method of any one of claims 8 to 13.
